(19) Europäisches Patentamt
European Patent Office
Office européen des brevets

(11) **EP 4 280 660 A1**

(12) **EUROPEAN PATENT APPLICATION**
published in accordance with Art. 153(4) EPC

(43) Date of publication:
**22.11.2023 Bulletin 2023/47**

(51) International Patent Classification (IPC):
**H04W 24/04** (2009.01)    **G06F 30/27** (2020.01)

(21) Application number: **21920605.9**

(52) Cooperative Patent Classification (CPC):
**G06F 30/27; G06N 3/04; G06N 3/08; H04W 24/04;**
G06F 2119/06

(22) Date of filing: **03.09.2021**

(86) International application number:
**PCT/CN2021/116534**

(87) International publication number:
**WO 2022/156226 (28.07.2022 Gazette 2022/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.01.2021 CN 202110068483**

(71) Applicant: **Huawei Technologies Co., Ltd.**
**Shenzhen, Guangdong 518129 (CN)**

(72) Inventors:
• **LI, Xiaowen**
  **Shenzhen, Guangdong 518129 (CN)**
• **GENG, Xinli**
  **Shenzhen, Guangdong 518129 (CN)**
• **WU, Jueying**
  **Shenzhen, Guangdong 518129 (CN)**
• **SONG, Qitao**
  **Shenzhen, Guangdong 518129 (CN)**

(74) Representative: **Huawei European IPR**
**Huawei Technologies Duesseldorf GmbH**
**Riesstraße 25**
**80992 München (DE)**

(54) **ANTENNA CONFIGURATION PARAMETER OPTIMIZATION METHOD AND APPARATUS, AND STORAGE MEDIUM**

(57) Embodiments of this application provide an antenna configuration parameter optimization method and apparatus, and a storage medium. The method includes: performing incremental update on a first prediction model based on a first antenna configuration parameter corresponding to an optimization region and a score of the first antenna configuration parameter, to obtain a second prediction model; obtaining a second antenna configuration parameter based on the second prediction model; determining whether to use the second antenna configuration parameter as a first target configuration parameter; and if the second antenna configuration parameter is used as the first target configuration parameter, delivering the second antenna configuration parameter. Incremental update is performed on the first prediction model based on the first antenna configuration parameter and the score of the first antenna configuration parameter, to obtain a new antenna configuration parameter based on an updated prediction model. According to the method, an updated prediction model can be quickly converged to an antenna configuration parameter with a higher score, so that efficiency of optimizing an antenna configuration parameter is improved.

FIG. 2

EP 4 280 660 A1

**Description**

This application claims priority to Chinese Patent Application No. 202110068483.9, filed with the China National Intellectual Property Administration on January 19, 2021 and entitled "ANTENNA CONFIGURATION PARAMETER OPTIMIZATION METHOD AND APPARATUS, AND STORAGE MEDIUM", which is incorporated herein by reference in its entirety.

**TECHNICAL FIELD**

This application relates to the field of communication technologies, and in particular, to an antenna configuration parameter optimization method and apparatus, and a storage medium.

**BACKGROUND**

Wireless communication network planning is to design an appropriate and feasible wireless network layout (where sites are usually deployed based on a cellular shape) based on requirements of a customer for network quality (coverage, interference, and capacity), and characteristics such as terrain and user distribution in a planning region, to meet the requirements of the customer with minimal investments. In an actual scenario, network quality problems such as weak coverage, overlapping coverage, and load imbalance may occur due to a difference between network planning and an actual physical environment, changes in city construction and user development, and a differentiated configuration requirement for a scenario-based parameter. Operators need to optimize an existing network parameter to resolve the foregoing quality problems in a current network.

During network parameter optimization, a radio frequency parameter is usually adjusted to control site coverage and enhance indicators such as road-level or full-user three-dimensional coverage quality, a capacity, and a rate, to ensure user accessibility, mobility, and experience.

New characteristics of a fifth generation mobile communication technology (5th generation mobile communication technology, 5G) bring a great technical challenge to network parameter optimization. A massive multi-input multi-output (Massive Multi-input Multi-output, Massive MIMO) antenna provides broadcast beam weights for different coverage scenarios. Therefore, radio frequency (Radio Frequency, RF) parameters are changed from three types (physical azimuth, physical downtilt, and electrical downtilt) of common antennas to six types (physical azimuth, physical downtilt, digital azimuth, digital downtilt, horizontal beamwidth, and vertical beamwidth) of massive MIMO antennas. Therefore, after the massive MIMO antennas are introduced, the adjustable parameters increases from 3 elements to 6 elements, and combination possibility of the adjustable radio frequency parameters increases exponentially. In addition, in a 5G scenario, macro and micro base stations are combined, and a distance between the base stations is shorter and coupling is stronger. As a result, a network environment is more complex. A network structure is more complex due to new characteristics such as MIMO and coordinated multi-point processing (Coordinated multi-point processing, CoMP) networking. In this scenario, a simulation platform established based only on a basic electromagnetic wave transmission formula has a problem of low precision of a simulation model, and it is difficult to accurately identify network quality problems and evaluate network quality differences between different parameter combinations.

In the conventional technology, a simulation model is constructed based on data (an electronic map, an antenna file, engineering parameter data, and a measurement report (Measurement Report, MR)/drive test (Drive Test, DT)) data fed back by a live network. The simulation model evaluates a network quality change when a parameter combination changes. A poor-quality region in a current network is identified based on an evaluation result of a current parameter combination of the simulation model, and a problem cell whose parameter needs to be adjusted is determined. The parameter combination of the problem cell is optimized by using a genetic algorithm until the genetic algorithm is converged or a maximum quantity of iterations of the genetic algorithm is reached. Then, an optimized antenna parameter is configured as an antenna parameter of the problem cell and a live network solution is delivered. In the conventional technology, when a new round of measurement data is obtained, a simulation model needs to be re-established and an optimization algorithm needs to be initialized. In other words, a simulation model needs to be re-established each time a new round of measurement data is obtained, and then an optimization algorithm needs to be re-initialized. The method leads to long end-to-end running time and low optimization efficiency.

**SUMMARY**

This application discloses an antenna configuration parameter optimization method and apparatus, and a storage medium to improve efficiency of searching for an optimal antenna configuration parameter.

According to a first aspect, an embodiment of this application provides an antenna configuration parameter optimization method, including: performing incremental update on a first prediction model based on a first antenna configuration parameter corresponding to an optimization region and a score of the first antenna configuration parameter, to obtain a second prediction model; obtaining a second antenna configuration parameter based on the second prediction model; determining whether to use the second antenna configuration parameter as a first target configuration parameter; and if the second antenna configuration parameter is used as the first target configuration parameter, delivering the second antenna configuration parameter.

The performing incremental update on a first prediction model based on a first antenna configuration parameter corresponding to an optimization region and a score of the first antenna configuration parameter, to obtain a second prediction model may be understood as: updating a calculation formula, a parameter, an attribute, or the like of the first prediction model based on the first antenna configuration parameter corresponding to the optimization region and the score of the first antenna configuration parameter, to obtain the second prediction model. Full update is to generate the second prediction model based on the first antenna configuration parameter, the score of the first antenna configuration parameter, and an antenna configuration parameter and a score used before the first prediction model is generated. In other words, full update is not to generate the second prediction model based on the generated first prediction model, and is not to establish an association between the first prediction model and the second prediction model. Compared with full update, incremental update is to update the generated first prediction model based on the first antenna configuration parameter and the score of the first antenna configuration parameter, to obtain a new prediction model.

In this embodiment of this application, incremental update is performed on the first prediction model based on the first antenna configuration parameter and the score of the first antenna configuration parameter, to obtain a new antenna configuration parameter based on an updated prediction model. According to the method, the prediction model is updated incrementally, and the updated prediction model can be quickly converged to an antenna configuration parameter with a high score, so that efficiency of optimizing an antenna configuration parameter is improved. Compared with an existing full update method, the solution may effectively improve delivery quality and delivery efficiency.

In an implementation, it is determined, by determining whether a preset condition is met, whether to use the second antenna configuration parameter as the first target configuration parameter. For example, whether to use the second antenna configuration parameter as the first target configuration parameter is determined based on whether a quantity of iterations N1 is reached, or based on whether the second antenna configuration parameter is obtained for N2 consecutive times (in other words, a same antenna configuration parameter is obtained after N2 iterations). N1 and N2 are both positive integers. If the quantity of iterations N1 is reached currently, or the second antenna configuration parameter is obtained for N2 consecutive times (in this case, the first antenna configuration parameter is the same as the second antenna configuration parameter), it is determined that the second antenna configuration parameter is used as the first target configuration parameter.

In an implementation, if the second antenna configuration parameter is not used as the first target configuration parameter, incremental update is performed on the second prediction model based on the second antenna configuration parameter and a score of the second antenna configuration parameter, to obtain a third prediction model; and a third antenna configuration parameter is obtained based on the third prediction model.

Incremental update is performed on the second prediction model based on the second antenna configuration parameter and the score of the second antenna configuration parameter, to obtain the third prediction model. According to the method, the prediction model is continuously updated, so that an updated prediction model can be quickly converged to an antenna configuration parameter with a high score, so that the efficiency of optimizing an antenna configuration parameter is improved, and delivery quality and delivery efficiency can be effectively improved.

In an implementation, the method further includes: obtaining measurement data and simulation data, where the measurement data is data obtained after a second target configuration parameter is delivered, and the simulation data is data obtained based on the second target configuration parameter and a first simulation model; calibrating the first simulation model based on the measurement data and the simulation data to obtain a second simulation model; and obtaining the score of the first antenna configuration parameter based on the first antenna configuration parameter and the second simulation model.

In this embodiment of this application, a simulation model is calibrated based on the measurement data obtained after the second target configuration parameter is delivered and the simulation data obtained by performing simulation based on the second target configuration parameter, so that an error of the simulation model is reduced, and an actual implementation effect of a live network is close, and further, simulation accuracy is improved.

In an implementation, the calibrating the first simulation model based on the measurement data and the simulation data to obtain a second simulation model includes: calibrating a link loss of the first simulation model based on the measurement data and the simulation data to obtain the second simulation model.

The link loss of the simulation model is calibrated to improve the simulation accuracy.

In an implementation, the calibrating a link loss of the first simulation model based on the measurement data and the simulation data includes: obtaining a first reference signal received power of each grid in a plurality of grids based on the measurement data; obtaining a second reference signal received power of each grid in the plurality of grids based on the simulation data of the first simulation model; obtaining a Kalman matrix of each grid based on the first reference signal received power and the second reference signal received power that are of each grid; and calibrating the link loss of the first simulation model based on the first reference signal received power, the second reference signal received power, and the Kalman matrix that are of each grid.

In this embodiment of this application, an error in the simulation model is calibrated based on a coverage evaluation and calibration technology of Kalman filtering, so that simulation evaluation is more accurate.

In an implementation, the method further includes: obtaining the stored first prediction model.

The first prediction model is stored, so that the first prediction model can be directly obtained when incremental update is performed on the first prediction model, so that efficiency of optimizing an antenna configuration parameter is improved.

In an implementation, the method further includes: storing a calibrated link loss. According to the method, when simulation is performed by using the simulation model, the calibrated link loss can be directly obtained, so that simulation efficiency and the efficiency of optimizing an antenna configuration parameter are improved.

In an implementation, the method further includes: storing the second simulation model. The second simulation model is stored, so that, during subsequent simulation, the second simulation model can be directly obtained and used, to improve simulation efficiency.

In an implementation, the method further includes: obtaining an initial prediction model based on a plurality of groups of historical antenna configuration parameters corresponding to the optimization region and a score of each group of historical antenna configuration parameters, to obtain the first prediction model based on the initial prediction model.

According to a second aspect, an embodiment of this application provides an antenna configuration parameter optimization apparatus, including: a first model generation module, configured to perform incremental update on a first prediction model based on a first antenna configuration parameter corresponding to an optimization region and a score of the first antenna configuration parameter, to obtain a second prediction model; a first parameter generation module, configured to obtain a second antenna configuration parameter based on the second prediction model; a determining module, configured to determine whether to use the second antenna configuration parameter as a first target configuration parameter; and a parameter determining module, configured to: if the second antenna configuration parameter is used as the first target configuration parameter, deliver the second antenna configuration parameter.

In this embodiment of this application, incremental update is performed on the first prediction model based on the first antenna configuration parameter and the score of the first antenna configuration parameter, to obtain a new antenna configuration parameter based on an updated prediction model. According to the method, the prediction model is updated, so that prediction accuracy of the prediction model can be improved, efficiency of optimizing an antenna configuration parameter can be improved, and delivery quality and delivery efficiency can be effectively improved.

In an implementation, the apparatus further includes: a second model generation module, configured to: if the second antenna configuration parameter is not used as the first target configuration parameter, perform incremental update on the second prediction model based on the second antenna configuration parameter and a score of the second antenna configuration parameter, to obtain a third prediction model; and a second parameter generation module, configured to obtain a third antenna configuration parameter based on the third prediction model.

In an implementation, the apparatus further includes a score determining module, configured to: obtain measurement data and simulation data, where the measurement data is data obtained after a second target configuration parameter is delivered, and the simulation data is data obtained based on the second target configuration parameter and a first simulation model; calibrate the first simulation model based on the measurement data and the simulation data to obtain a second simulation model; and obtain the score of the first antenna configuration parameter based on the first antenna configuration parameter and the second simulation model.

In an implementation, the apparatus further includes an obtaining module, configured to obtain the stored first prediction model.

In an implementation, the apparatus further includes a third model generation module, configured to obtain an initial prediction model based on a plurality of groups of historical antenna configuration parameters corresponding to the optimization region and a score of each group of historical antenna configuration parameters, to obtain the first prediction model based on the initial prediction model.

According to a third aspect, this application provides an antenna configuration parameter optimization apparatus, including a processor and a memory, where the memory is configured to store program code, and the processor is configured to invoke the program code to perform the foregoing methods.

According to a fourth aspect, this application provides a computer storage medium, including computer instructions. When the computer instructions are run on an electronic device, the electronic device is enabled to perform the method according to any one of the possible implementations of the first aspect.

According to a fifth aspect, an embodiment of this application provides a computer program product. When the computer program product is run on a computer, the computer is enabled to perform the method according to any one of the possible implementations of the first aspect.

According to a sixth aspect, an embodiment of this application provides a chip system. The chip system is used in an electronic device. The chip system includes one or more interface circuits and one or more processors. The interface circuit and the processor are connected to each other through a line. The interface circuit is configured to receive a signal from a memory of the electronic device, and send the signal to the processor. The signal includes computer instructions stored in the memory. When the processor executes the computer instructions, the electronic device performs the methods.

It may be understood that the apparatus according to the second aspect, the apparatus according to the third aspect, the computer storage medium according to the fourth aspect, the computer program product according to the fifth aspect, or the chip system according to the sixth aspect provided above are all configured to perform the method according to any one of the first aspect. Therefore, for beneficial effects that can be achieved, refer to beneficial effects in the corresponding method. Details are not described herein again.

**BRIEF DESCRIPTION OF DRAWINGS**

The following describes the accompanying drawings used in embodiments of this application.

FIG. 1a is a schematic diagram of a scenario of an antenna configuration parameter optimization system according to an embodiment of this application;

FIG. 1b is a schematic diagram of an antenna configuration parameter optimization method according to an embodiment of this application;

FIG. 1c is a schematic diagram of an antenna configuration parameter optimization method according to an embodiment of this application;

FIG. 2 is a schematic flowchart of an antenna configuration parameter optimization method according to an embodiment of this application;

FIG. 3 is a schematic flowchart of another antenna configuration parameter optimization method according to an embodiment of this application;

FIG. 4 is a schematic flowchart of another optimization method according to an embodiment of this application;

FIG. 5 is a schematic diagram of a structure of an antenna configuration parameter optimization apparatus according to an embodiment of this application; and

FIG. 6 is a schematic diagram of a structure of another antenna configuration parameter optimization apparatus according to an embodiment of this application.

**DESCRIPTION OF EMBODIMENTS**

The following describes embodiments of this application with reference to the accompanying drawings in embodiments of this application. Terms used in implementations of embodiments of this application are merely used to explain specific embodiments of this application, and are not intended to limit this application.

Embodiments of this application may be applied to 5G or another future network, for example, 6G.

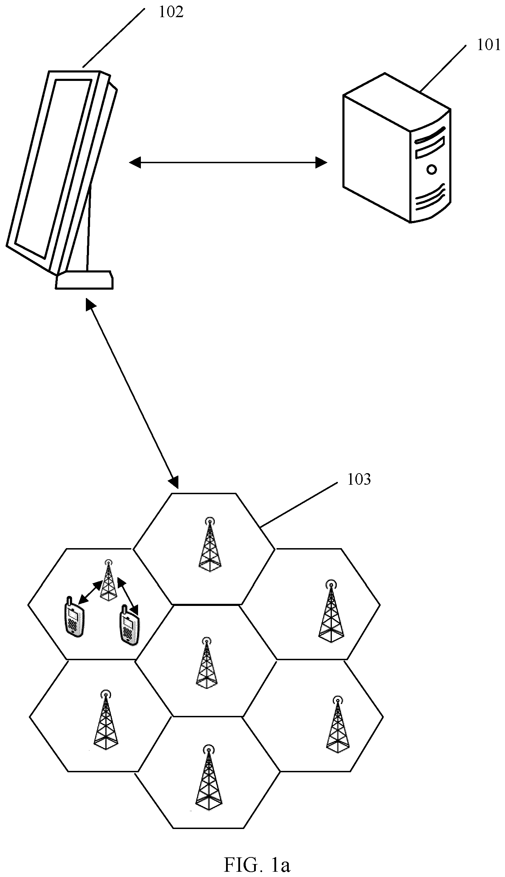

FIG. 1a is a schematic diagram of a scenario of an antenna configuration parameter optimization system according to an embodiment of this application. The antenna configuration parameter optimization system includes a computing server 101, a network management server 102, and a base station 103. The network management server 102 may be specifically an operation and maintenance center (Operation and Maintenance Center, OMC). In this application, an example in which the network management server 102 is the OMC is used for description. It should be understood that the network management server 102 may alternatively be an operations support system (Operations Support System, OSS) or the like. The computing server 101 sends a measurement data input request to the OMC. After receiving the measurement data input request, the OMC controls the base station 103 to start to collect data. The base station 103 starts to perform measurement control on measurement data of an antenna in a communication network, and reports the measurement data to the OMC in real time. After collecting the measurement data, the OMC may import the measurement data into the computing server 101 to report the measurement data. The computing server 101 optimizes an antenna configuration parameter based on the measurement data, and sends a configuration command to the OMC after obtaining an optimized antenna configuration parameter. The antenna configuration parameter may also be referred to as an antenna radio frequency (Radio Frequency, RF) parameter. The OMC converts the optimized RF parameter into a man-machine language (Man-Machine Language, MML) instruction, adjusts an RF parameter of a base station antenna, and delivers an adjusted parameter.

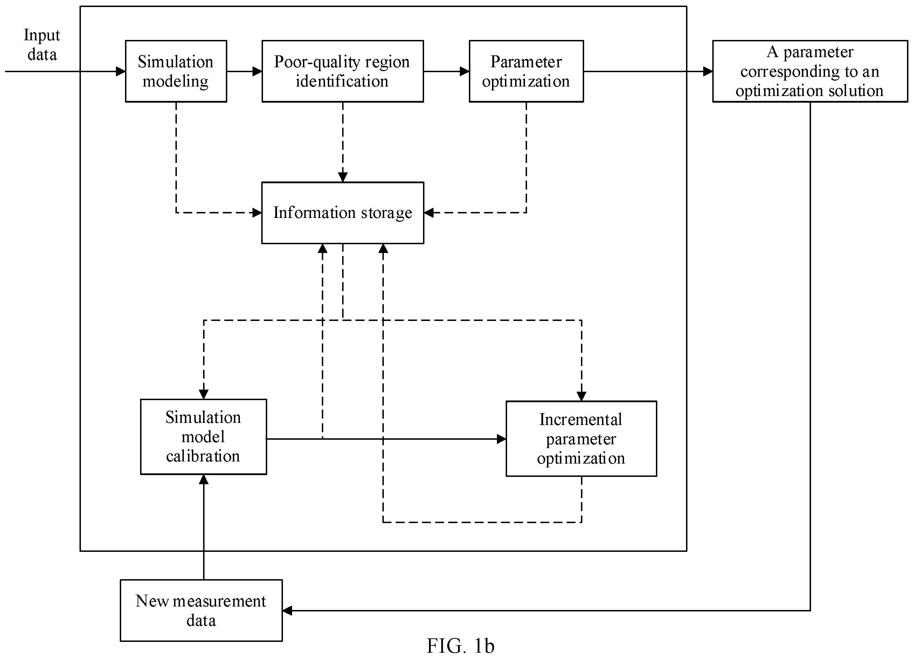

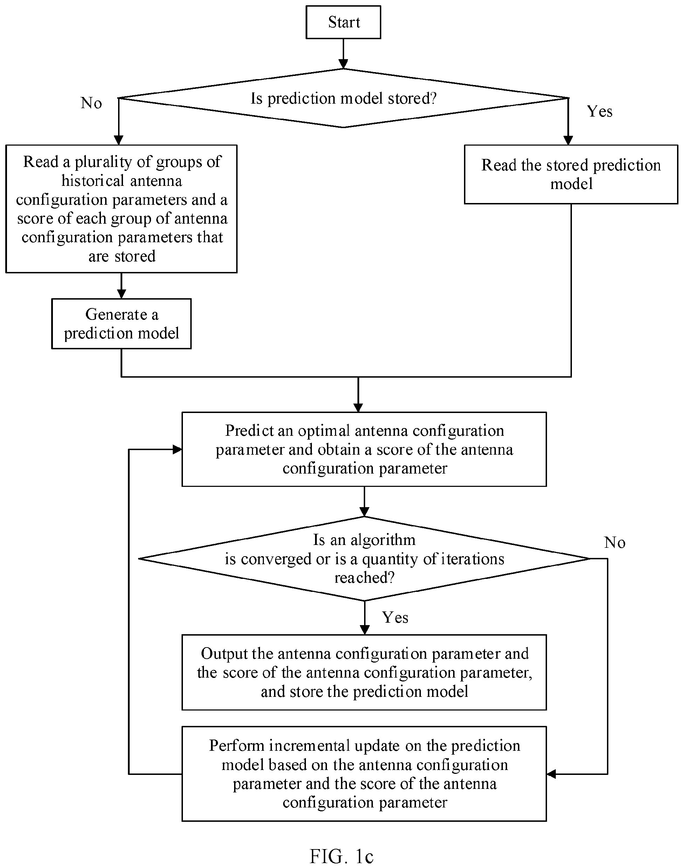

For that the computing server 101 optimizes the antenna configuration parameter based on the measurement data, refer to FIG. 1b. First, the computing server 101 establishes a simulation model for input data (the measurement data) based on an electromagnetic wave transmission characteristic. After an RF parameter changes, a changed reference signal received power (Reference Signal Received Power, RSRP) value may be obtained through simulation and evaluation. Then, a problem cell in an optimization region is determined based on an RSRP threshold and the simulated RSRP value. Then, an optimization algorithm is used to optimize an RF parameter of the problem cell. In an optimization process, scores of different antenna configuration parameters may be obtained through simulation and evaluation. A prediction model is trained based on an antenna configuration parameter and a corresponding score that are attempted in the RF parameter optimization process. A currently predicted optimal antenna configuration parameter may be obtained based on the prediction model. A score of the antenna configuration parameter may be obtained by inputting the optimal antenna configuration parameter into the simulation model. Then, the prediction model is incrementally updated based on the antenna configuration parameter and the score of the antenna configuration parameter. The computing server 101 further stores an updated prediction model. The prediction model is continuously updated until an algorithm corresponding to the prediction model is converged or a quantity of iterations is reached, so that the optimal antenna configuration parameter corresponding to the current prediction model is used as a target configuration parameter. Further, the network management server 102 delivers the target configuration parameter. For specific steps about how to use and update a prediction model, refer to FIG. 1c. Details are as follows:

A computing server 101 determines whether a prediction model is stored. If no prediction model is stored, the computing server 101 reads a plurality of groups of historical antenna configuration parameters and a score of each group of antenna configuration parameters that are stored, and generates a prediction model, where the prediction model may be referred to as an initial prediction model. If a prediction model is stored, the stored prediction model is directly read.

Further, the computing server 101 obtains a currently predicted optimal antenna configuration parameter based on the prediction model, and obtains a score of the antenna configuration parameter based on a simulation model. When an algorithm corresponding to the prediction model is not converged or a quantity of iterations is not reached, the computing server 101 performs incremental update on the prediction model based on the antenna configuration parameter and the score of the antenna configuration parameter until the algorithm corresponding to the prediction model is converged or the quantity of iterations is reached. The computing server 101 uses the optimal antenna configuration parameter corresponding to the current prediction model as a target configuration parameter, and stores the prediction model.

In an implementation, the computing server 101 further calibrates the simulation model based on an RSRP value obtained through simulation and an RSRP value obtained through measurement, to obtain a calibrated simulation model.

Further, the computing server 101 further stores the simulation model, the problem cell, the antenna configuration parameter and the corresponding score that are attempted in the RF parameter optimization process.

The system is described by using an example in which the computing server 101 optimizing the antenna configuration parameter and the network management server 102 delivers the antenna configuration parameter. In another implementation, the computing server 101 and the network management server 102 may be integrated into one, to directly optimize and deliver the antenna configuration parameter.

It should be understood that the antenna configuration parameter optimization method in FIG. 1a, FIG. 1b, and FIG. 1c are further described in the following.

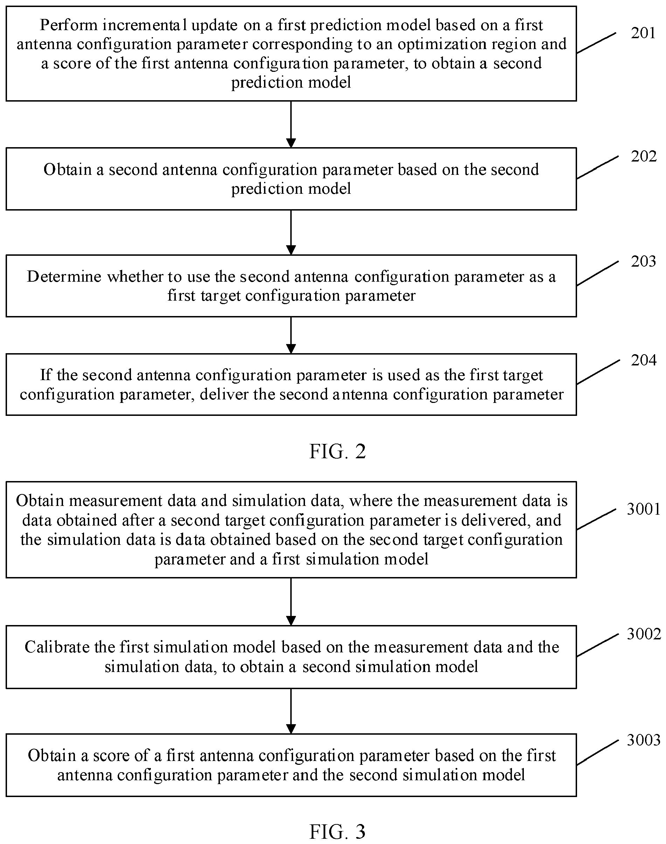

The following describes an implementation process of the antenna configuration parameter optimization method provided in an embodiment of this application. FIG. 2 is a schematic flowchart of an antenna configuration parameter optimization method according to an embodiment of this application. In this embodiment of this application, an example in which a computing server performs the antenna configuration parameter optimization method is used for description. The antenna configuration parameter optimization method includes steps 201 to 204, which are specifically as follows.

201: Perform incremental update on a first prediction model based on a first antenna configuration parameter corresponding to an optimization region and a score of the first antenna configuration parameter, to obtain a second prediction model.

The optimization region may be a region corresponding to a plurality of communication cells controlled by a base station that is periodically optimized.

The first antenna configuration parameter may be any antenna configuration parameter obtained by the computing server in a process of determining a target configuration parameter. The first antenna configuration parameter may include one or more of the following: a physical azimuth, a physical downtilt, a digital azimuth, a digital downtilt, a horizontal beam width, a vertical beam width, or the like.

The score of the first antenna configuration parameter is used to represent network quality (specifically, signal quality) corresponding to the first antenna configuration parameter. It should be understood that the score may also be specifically referred to as a label or the like. This is not specifically limited in this solution.

The performing incremental update on a first prediction model based on a first antenna configuration parameter corresponding to an optimization region and a score of the first antenna configuration parameter, to obtain a second prediction model may be understood as: updating a calculation formula, a parameter, an attribute, or the like of the first prediction model based on the first antenna configuration parameter corresponding to the optimization region and the score of the first antenna configuration parameter, to obtain the second prediction model. Full update is to generate the second prediction model based on the first antenna configuration parameter, the score of the first antenna configuration parameter, and an antenna configuration parameter and a score used before the first prediction model is generated. In other words, full update is not to generate the second prediction model based on the generated first prediction model, and is not to establish an association between the first prediction model and the second prediction model. Compared with full update, incremental update is to update the generated first prediction model based on the first antenna configuration parameter and the score of the first antenna configuration parameter, to obtain a new prediction model.

Specifically, the first prediction model is generated based on an antenna configuration parameter set $X_N$ and a corresponding antenna configuration parameter score set $F_N$. The antenna configuration parameter set $X_N = \{x_i, i \in N\}$ represents a set of a plurality of groups of antenna configuration parameters $x_i$; and the score set $F_N = \{f(x_i), i \in N\}$ represents a set of a score $f(x_i)$ corresponding to each of the plurality of groups of antenna configuration parameters. The following describes incremental update of the first prediction model.

In an implementation, an example in which the first prediction model is a probability prediction model is used for description.

First, a covariance $k(x_i, x_j)$ between any two antenna configuration parameters and $x_i, x_j$ is defined to meet the following conditions:

$$\mathrm{k}(x_i, x_j) = \alpha^2 \exp(-\frac{1}{2\theta^2}\left|\left|x_i - x_j\right|\right|^2),$$

where
the antenna configuration parameters $x_i$ *and* $x_j$ both belong to the antenna configuration parameter set $X_N$, and $\alpha$ and $\theta$ are both non-zero coefficients.

Then, a probability of occurrence of a score $F_N$ is maximized under the two hyperparameters $\alpha$ and $\theta$. In other words, the hyperparameters $\alpha$ and $\theta$ are calculated by maximizing edge log-likelihood. The edge log-likelihood may be expressed as:

$$\alpha, \theta = \underset{\alpha,\theta}{\operatorname{argmax}}\{log\, p(F_N|\alpha,\theta)\} = \underset{\alpha,\theta}{\operatorname{argmax}}\{-\frac{1}{2}F_N{}^T K^{-1} F_N - \frac{1}{2}\,log|\mathrm{K}| - \frac{N}{2}\,log(2\pi)\},$$

where
$p(F_N|\alpha,\theta)$ is a probability of occurrence of $F_N$ corresponding to the hyperparameters $\alpha$ and $\theta$.

The hyperparameters $\alpha$ and $\theta$ are obtained through calculation based on maximized edge log-likelihood, and then a covariance matrix K obtained through calculation based on $k(x_i, x_j)$ may be expressed as follows:

$$\mathrm{K} = \begin{bmatrix} k(x_1, x_1) & \cdots & k(x_1, x_N) \\ \vdots & \ddots & \vdots \\ k(x_N, x_1) & \cdots & k(x_N, x_N) \end{bmatrix} (1)$$

A gain matrix $F_N$ may be expressed as follows:

$$F_N = \begin{bmatrix} f(x_1) \\ \vdots \\ f(x_N) \end{bmatrix} (2)$$

Parameters of the first prediction model include the covariance matrix K and the gain matrix $F_N$.

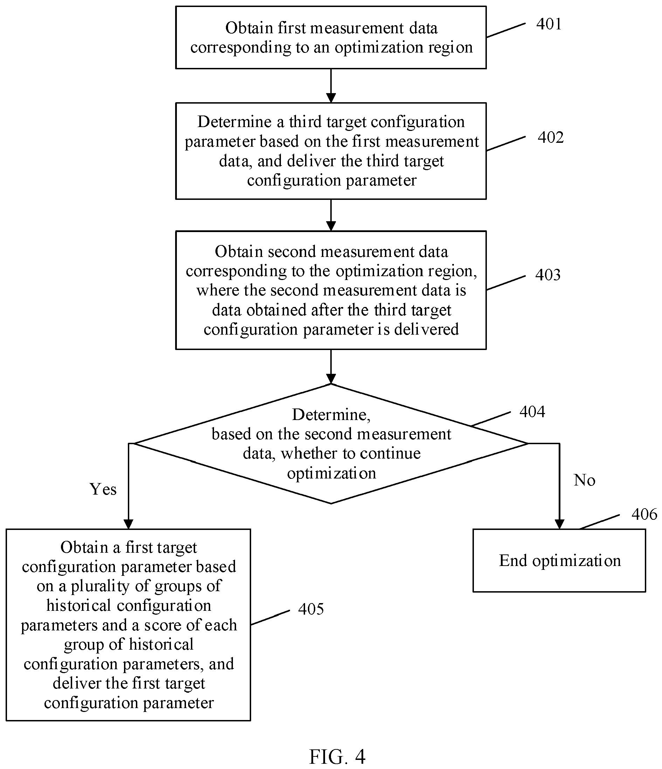

The first prediction model is updated based on a first antenna configuration parameter $x_{best}$ and a score $f(x_{best})$ of the first antenna configuration parameter. The first antenna configuration parameter $x_{best}$ is obtained based on the first prediction model. For details, refer to descriptions in an embodiment shown in FIG. 4. Details are not described herein.

Specifically, an updated covariance matrix K of the first prediction model may be expressed as follows:

$$K = \begin{bmatrix} k(x_1, x_1) & \cdots & k(x_1, x_N) & k(x_1, x_{best}) \\ \vdots & \ddots & \vdots & \vdots \\ k(x_N, x_1) & \cdots & k(x_N, x_N) & k(x_N, x_{best}) \\ k(x_{best}, x_1) & \cdots & k(x_{best}, x_t) & k(x_{best}, x_{best}) \end{bmatrix} \quad (3)$$

A new gain matrix $F_N$ may be expressed as follows:

$$F_N = F_N + [f(x_{best})] \quad (4)$$

The covariance matrix shown in formula (3) is obtained by adding a row and a column to the original covariance matrix shown in formula (1), and the gain matrix $F_N$ shown in formula (4) is obtained by adding a row to the original gain matrix $F_N$ shown in formula (2). Based on the foregoing manner, incremental update of the first prediction model can be implemented. The foregoing is merely an example, and there may be update in another form. This is not specifically limited in this solution.

In another implementation, an example in which the first prediction model is a neural network prediction model is used for description. A sample pair is generated based on the antenna configuration parameter set $X_N$ and the corresponding antenna configuration parameter score set $F_N$. The sample pair uses the antenna configuration parameter as input data and uses the score of the antenna configuration parameter as an expected output, and a neural network is trained through learning.

The neural network meets the following conditions:

$$W, B = \underset{W,B}{\operatorname{argmin}}\{WX_N + B - F_N\} \quad (5)$$

Correspondingly, parameters of the first prediction model are a weight matrix W and a deviation matrix B.

The first prediction model is updated based on a first antenna configuration parameter $x_{best}$ and a score $f(x_{best})$ of the first antenna configuration parameter. The first antenna configuration parameter $x_{best}$ is obtained based on the first prediction model. For details, refer to descriptions in an embodiment shown in FIG. 4. Details are not described herein.

An updated sample pair of the first prediction model may be expressed as:

$$X_N = X_N + [x_{best}]$$

$$F_N = F_N + [f(x_{best})]$$

An updated weight matrix W and an updated deviation matrix B of the first prediction model may be expressed as follows:

$$W = W$$

$$B = \underset{B}{\operatorname{argmin}}\{WX_N + B - F_N\} \quad (6)$$

It should be noted that, for the first prediction model, only the deviation matrix is updated, and the weight matrix is not updated. Based on the foregoing manner, incremental update of the neural network prediction model can be implemented.

The foregoing uses two different models as examples to describe incremental update of the model. There may alternatively be incremental update of a model in another form. This is not specifically limited in this solution.

The first prediction model may be obtained in the following manner:

obtaining an initial prediction model based on a plurality of groups of historical antenna configuration parameters corresponding to the optimization region and a score of each group of historical antenna configuration parameters, to obtain the first prediction model based on the initial prediction model.

In an implementation, the initial prediction model may be the first prediction model. The computing server performs simulation on the plurality of groups of historical antenna configuration parameters to obtain the score of each group of historical antenna configuration parameters, and obtains the first prediction model based on the plurality of groups of historical antenna configuration parameters and the score of each group of historical antenna configuration parameters. A historical antenna configuration parameter with a highest score in the plurality of groups of historical antenna configuration parameters is obtained based on the first prediction model, and the historical antenna configuration parameter with the highest score is the first antenna configuration parameter. It should be understood that the plurality of groups of historical antenna configuration parameters may be obtained from a preset antenna configuration parameter set. The plurality of groups of historical antenna configuration parameters may alternatively be generated randomly.

In another implementation, the initial prediction model may alternatively be the 1st prediction model corresponding to the optimization region in a time sequence. The computing server performs incremental update on the initial prediction model, and obtains the first prediction model through continuous iterative update. Specifically, the computing server performs simulation on the plurality of groups of historical antenna configuration parameters to obtain the score of each group of historical antenna configuration parameters, and obtains the initial prediction model based on the plurality of groups of historical antenna configuration parameters and the score of each group of historical antenna configuration parameters. The first prediction model is obtained through continuous iterative update based on the initial prediction model. For a specific implementation of obtaining the first prediction model through continuous iterative update based on the initial prediction model, refer to the descriptions of iterative update of the first prediction model in the foregoing embodiment. An update principle of the iterative update is the same as that of the iterative update of the first prediction model. Details are not described herein again.

Optionally, before step 201, the method further includes step 200: Obtain the stored first prediction model. The first prediction model is stored, so that the first prediction model can be directly obtained when incremental update is performed on the first prediction model, so that efficiency of optimizing an antenna configuration parameter is improved.

Correspondingly, after step 201, the method further includes step 2011: Store the second prediction model, to subsequently perform incremental update on the second prediction model. Step 2011 may be performed after step 201 and before step 202, or may be performed after step 202. This is not specifically limited in this solution.

In other words, when obtaining any prediction model, the computing server further stores the prediction model, to be used in subsequent incremental update.

Optionally, the computing server may calibrate a simulation model based on measurement data and simulation data to obtain the score of the first antenna configuration parameter in step 201. Specifically, before step 201, the method further includes steps 3001 to 3003. FIG. 3 is a schematic flowchart of an antenna configuration parameter optimization method according to an embodiment of this application. Details are as follows:

3001: Obtain measurement data and simulation data, where the measurement data is data obtained after a second target configuration parameter is delivered, and the simulation data is data obtained based on the second target configuration parameter and a first simulation model.

The measurement data includes one or more of the following: an electronic map, an antenna file, engineering parameter data representing a current radio frequency parameter, and measured MR data, or DT data. The electronic map is a map that is stored and searched in a digital manner by using a computer technology. The antenna file is an antenna lobe pattern file. The MR data is a measurement report reported by user equipment (User Equipment, UE), and includes a primary serving cell identifier, RSRP of a primary serving cell, a neighboring cell identifier, RSRP of a neighboring cell, and beam IDs and corresponding RSRP of cell-level broadcast beams of the primary serving cell and the neighboring cell. The DT data is data of a drive test, and is similar to minimization of drive tests (Minimization of Drive Tests, MDT) data. The MDT data is a measurement report that is reported by the UE and that carries longitude and latitude information. The MDT data may be considered as MR data that carries longitude and latitude.

It should be noted that the second target configuration parameter is a target configuration parameter that is obtained by the computing server at a previous time and that is relative to a target parameter searched at a current time (namely, a first target configuration parameter in the following step 204). Specifically, after delivering the second target configuration parameter by using a network management server, the computing server obtains the measurement data by using the network management server. The computing server further inputs the second target configuration parameter into the first simulation model to obtain the simulation data.

3002: Calibrate the first simulation model based on the measurement data and the simulation data, to obtain a second simulation model.

In an implementation, a link loss of the first simulation model is calibrated based on the measurement data and the simulation data to obtain the second simulation model.

Specifically, a first reference signal received power of each grid in a plurality of grids is obtained based on the measurement data; a second reference signal received power of each grid in the plurality of grids is obtained based on the simulation data of the first simulation model; a Kalman matrix of each grid is obtained based on the first reference signal received power and the second reference signal received power that are of each grid; and the link loss of the first simulation model is calibrated based on the first reference signal received power, the second reference signal received power, and the Kalman matrix that are of each grid, to obtain a calibrated link loss, and further obtain the second simulation model.

In other words, the link loss of the simulation model is calibrated to improve simulation accuracy.

Specifically, when the measurement data obtained after the second target configuration parameter is delivered is obtained, the computing server rasterizes the MR/DT data based on latitude and longitude information in each piece of MR/DT data in the measurement data, to allocate the MR/DT data to a plurality of grids.

For each grid, a latest reference signal received power RSRP that is measured by the grid is calculated. Specifically, a part of measured edge data is removed, and remaining measurement data is averaged. For example, for each grid, a plurality of pieces of measurement information MR = {$mr_i$}, and i $\in$ N' that are at a plurality of moments and that are newly measured by the grid are obtained. Each piece of $mr_i$ information includes $rsrp_i$ obtained through measurement. A plurality of pieces of $mr_i$ at a plurality of moments are summarized and sorted in descending order based on $rsrp_i$ of each $mr_i$, and a part of $mr_i$ is removed. For example, $mr_i$ at the last 5% is removed, to form new $MR_{new}$, where an RSRP measurement value of each grid may be expressed as follows:

$$RSRP = \frac{\sum_i^{MR_{new}} rsrp_i}{0.95 * N'}$$

For each grid, a measurement variance R of the grid is calculated:

$$R = \frac{\sum_{i=1}^{MR_{new}} (rsrp_i - RSRP)^2}{0.95 * N'}$$

In addition, for each grid, simulation is performed based on the second target configuration parameter, to obtain a simulated value RSRP' of the reference signal received power of each grid.

For each grid, a simulation variance of the grid is obtained. A simulation variance $P^-$ of the grid is obtained by obtaining simulation values of, for example, eight grids around the grid.

The simulation values of the eight grids around the grid may be expressed as RSRP'$_i$, and i $\in$ [1 - 8].

An average value $mean = \frac{\sum_{i=1}^{8} RSRP'_i + RSRP'}{9}$ of the simulation value of the grid and the simulation values of the eight grids around the grid is calculated.

The simulation variance $P^- = \frac{\sum_{i=1}^{8} (RSRP'_i - mean)^2 + (RSRP' - mean)^2}{9}$ of the grid is calculated.

In this solution, the eight grids are merely used as an example for description, and there may be another specified quantity of grids. This is not specifically limited in this solution.

For each grid, a Kalman matrix of the grid is calculated:

$$Kal = \frac{P^-}{P^- + R}$$

For each grid, a calibrated reference signal received power RSRP" of the grid is calculated based on a Kalman matrix of the grid:

$$RSRP'' = RSRP' + Kal(RSRP - RSRP')$$

A calibrated link loss $\widehat{LinkLoss}$ of each grid is calculated based on the calibrated RSRP":

$$\widehat{LinkLoss} = RSRP'' - AntennaGain + Power$$

In this embodiment, based on a simulated RSRP value and a measured RSRP value newly fed back by a live network, a Kalman filtering technology (convergence of various data sources) is used and reliability of an estimation value and a measured value is comprehensively considered, to obtain a calibrated Linkloss of each grid by weighting.

Therefore, a simulation error is reduced. Simulation accuracy is improved by combining the simulated RSRP value with a latest measured RSRP value.

In an implementation, for each grid, a simulation variance $P^{-'} = (I - Kal)P^{-}$ of the grid is updated and calculated, where I is a unit moment matrix. The computing server stores the simulation variance $P^{-'}$, to use the simulation variance when the simulation model is calibrated at next time.

The second simulation model is obtained based on the calibrated link loss.

3003: Obtain the score of the first antenna configuration parameter based on the first antenna configuration parameter and the second simulation model.

The first antenna configuration parameter is input into the calibrated simulation model to obtain a calibrated reference signal received power of each grid through calculation, to obtain the score of the first antenna configuration parameter. In an implementation, in this solution, a proportion of a grid whose RSRP value is greater than an RSRP threshold in the entire optimization region to total grids is obtained through statistics collection, and is denoted as the score of the first antenna configuration parameter.

In this embodiment of this application, the simulation model is calibrated based on the measurement data obtained by delivering the second target configuration parameter and the simulation data obtained by performing simulation on the second target configuration parameter, to obtain a simulation model with higher simulation precision, so that accuracy and precision of a score of an antenna configuration parameter in a process of optimizing a target configuration parameter are improved, and further, efficiency of optimizing an antenna configuration parameter optimization is improved.

202: Obtain a second antenna configuration parameter based on the second prediction model.

Specifically, the computing server obtains the second antenna configuration parameter by inputting a plurality of random antenna configuration parameters into the second prediction model. The second antenna configuration parameter is an optimal configuration parameter obtained by the second prediction model. For example, the second antenna configuration parameter is a configuration parameter with a highest score in the plurality of random antenna configuration parameters.

203: Determine whether to use the second antenna configuration parameter as a first target configuration parameter.

Specifically, the computing server determines, by determining whether a preset condition is met, whether to use the second antenna configuration parameter as the first target configuration parameter.

For example, whether to use the second antenna configuration parameter as the first target configuration parameter is determined based on whether a quantity of iterations N1 is reached, or based on whether the second antenna configuration parameter is obtained for N2 consecutive times (in other words, a same antenna configuration parameter is obtained after N2 iterations). N1 and N2 are both positive integers. If the quantity of iterations N1 is reached currently, or the second antenna configuration parameter is obtained for N2 consecutive times (in this case, the first antenna configuration parameter is the same as the second antenna configuration parameter), the computing server determines to use the second antenna configuration parameter as the first target configuration parameter.

204: If the second antenna configuration parameter is used as the first target configuration parameter, deliver the second antenna configuration parameter.

After using the second antenna configuration parameter as the first target configuration parameter, the computing server delivers the first target configuration parameter (namely, the second antenna configuration parameter) by using the network management server. In other words, the computing server sends the first target configuration parameter to the network management server, so that the network management server delivers the first target configuration parameter.

In an implementation, if the second antenna configuration parameter is not used as the first target configuration parameter, the computing server performs incremental update on the second prediction model based on the second antenna configuration parameter and a score of the second antenna configuration parameter, to obtain a third prediction model, and obtain a third antenna configuration parameter based on the third prediction model. That the second antenna configuration parameter is not used as the first target configuration parameter means that the preset condition is not met. For example, the quantity of iterations N1 is not reached currently, or the second antenna configuration parameter is not obtained currently for N2 consecutive times.

Correspondingly, the computing server determines whether to use the third antenna configuration parameter as the first target configuration parameter. If the third antenna configuration parameter is used as the first target configuration parameter, the computing server delivers the third antenna configuration parameter by using the network management server.

The computing server repeatedly performs the foregoing steps until the first target configuration parameter is obtained, and delivers the first target configuration parameter by using the network management server.

It should be noted that the computing server is used as an example for description in this embodiment of this application. The network management server and the computing server may alternatively be integrated. Correspondingly, if the second antenna configuration parameter is used as the first target configuration parameter, the computing server directly delivers the second antenna configuration parameter.

In this embodiment of this application, incremental update is performed on the first prediction model based on the first antenna configuration parameter and the score of the first antenna configuration parameter, to obtain a new antenna configuration parameter based on an updated prediction model. According to the method, the prediction model is updated incrementally, and the updated prediction model can be quickly converged to an antenna configuration parameter with a high score, so that efficiency of optimizing an antenna configuration parameter is improved. Compared with an existing full update method, the solution may effectively improve delivery quality and delivery efficiency.

The following describes in detail a specific implementation process of the antenna configuration parameter optimization method provided in an embodiment of this application. FIG. 4 is a schematic flowchart of an antenna configuration parameter optimization method according to an embodiment of this application. The method includes steps 401 to 406 and is specifically as follows:

401: Obtain first measurement data corresponding to an optimization region.

A computing server may obtain, by using a network management server, the first measurement data corresponding to the optimization region. The network management server collects the first measurement data by controlling a base station.

The first measurement data is initial measurement data corresponding to the optimization region. In other words, the first measurement data is corresponding measurement data when the optimization region has not been optimized.

402: Determine a third target configuration parameter based on the first measurement data, and deliver the third target configuration parameter by using the network management server.

The computing server determines, based on the first measurement data, a cell whose antenna configuration parameter needs to be optimized, and further determines the third target configuration parameter. Correspondingly, when the first prediction model in the foregoing embodiment is an initial prediction model, the third target configuration parameter is the second target configuration parameter in the foregoing embodiment.

Step 402 may include steps 4021 to 4023, which are specifically as follows:

4021: Construct a simulation model for grid RSRP evaluation based on the first measurement data.

The computing server establishes the simulation model based on an electromagnetic wave transmission characteristic by using the first measurement data. The simulation model includes a link loss.

The electromagnetic wave transmission characteristic meets the following formula:

$$\text{Reference signal received power RSRP=Antenna gain+Power--Linkloss} \quad (7)$$

The link loss is a link loss of each grid in a plurality of grids obtained after the first measurement data is rasterized.

Specifically, MR/DT data is rasterized based on latitude and longitude information in each piece of MR/DT data in the first measurement data to obtain a plurality of grids, and further obtains RSRP of each grid in the plurality of grids. An antenna gain and power of each grid is obtained based on an antenna file and engineering parameter data in the first measurement data. Further, the link loss of each grid may be obtained according to the formula (7). The computing server stores the link loss of each grid, to subsequently use the simulation model.

4022: Identify, based on the first measurement data, a cell (a problem cell) that needs to be adjusted.

The computing server obtains the RSRP of each grid based on the MR/DT data. A grid whose reference signal received power is less than a preset threshold is defined as a weak coverage grid based on the reference signal received power RSRP corresponding to each grid. Weak coverage grids are clustered to obtain a weak coverage region. A cell whose longitude and latitude belong to the weak coverage region is defined as a problem cell.

4023: Obtain the third target configuration parameter corresponding to the problem cell, and deliver the third target configuration parameter by using the network management server.

Specifically, the computing server randomly generates a group of antenna configuration parameters $x_i$, and $x_i \in X_{all}$, where $X_{all}$ represents a global antenna configuration parameter, in other words, a universal set of optional antenna configuration parameters of the problem cell corresponding to the optimization region, in other words, a set of all optional parameters.

For an antenna configuration parameter $x_i$, AntennaGain and Power corresponding to each grid is obtained based on the antenna file and engineering parameter data.

An RSRP value of each grid corresponding to the antenna configuration parameter $x_i$ may be obtained based on the antenna configuration parameter $x_i$ and the foregoing simulation model.

A proportion of a grid whose RSRP value is greater than an RSRP threshold in the entire optimization region to total grids is obtained through statistics collection, and is denoted as score $f(x_i)$. The computing server stores an antenna configuration parameter $x_i$ and a score corresponding to the antenna configuration parameter $x_i$.

For a plurality of groups of different antenna configuration parameters $x_i$, the foregoing steps are repeatedly performed to obtain a score respectively corresponding to each group of antenna configuration parameters until a quantity of attempts N3 is met, to output an antenna configuration parameter x∗ with a highest score and an evaluation score *f*(*x*∗) thereof in an attempt process.

The antenna configuration parameter *x*∗ with the highest score is the third target configuration parameter. The third target configuration parameter includes configuration of each RF parameter of each antenna in the problem cell. The computing server delivers the third target configuration parameter to a live network by using the network management server, to adjust an RF parameter of an antenna in a real communication network.

403: Obtain second measurement data corresponding to the optimization region, where the second measurement data is data obtained after the third target configuration parameter is delivered.

The computing server obtains, by using the network management server, the corresponding second measurement data, namely, new measurement data after the third target configuration parameter is delivered. The computing server may send, to the network management server after a preset time interval, the second measurement data obtained after the third target configuration parameter is delivered. The preset time may be several hours, several days, or the like. This is not specifically limited in this solution. When the third target configuration parameter is the second target configuration parameter in the foregoing embodiment, correspondingly, the second measurement data may be the measurement data in the foregoing embodiment.

The second measurement data may only include MR/DT data. The second measurement data may also include an electronic map, an antenna file, engineering parameter data representing a current radio frequency parameter, measured MR data and/or DT data, and the like. This is not specifically limited in this solution.

404: Determine, based on the second measurement data, whether to continue optimization.

The computing server rasterizes the MR/DT data based on new measurement data and the longitude and latitude information in each piece of the MR/DT data, allocates the MR/DT data to the plurality of grids generated in step 4021, to obtain the RSRP of each grid in the plurality of grids, and then collects the proportion of the grid whose RSRP value is greater than the RSRP threshold in the entire optimization region to the total grids. If the proportion meets a preset requirement, go to step 406 to end optimization; otherwise, if the proportion of the grid whose RSRP value is greater than the RSRP threshold in the entire optimization region to the total grids is less than the preset requirement, go to step 405.

405: If optimization needs to be continued, obtain a first target configuration parameter based on a plurality of groups of historical configuration parameters and a score of each group of historical configuration parameters, and deliver the first target configuration parameter.

In an implementation, the computing server obtains the first target configuration parameter based on a second prediction model. The computing server performs incremental update on a first prediction model based on a first antenna configuration parameter and a score of the first antenna configuration parameter, to obtain the second prediction model.

Specifically: (1) The computing server obtains an initial prediction model based on a plurality of groups of historical antenna configuration parameters attempted in the process of obtaining the third target configuration parameter during the 1st optimization and a score of each group of historical antenna configuration parameters in the plurality of groups of historical antenna configuration parameters, and stores the initial prediction model. For a specific process, refer to the descriptions of obtaining the initial prediction model in step 201 in the foregoing embodiment. Details are not described herein again.

Then, the computing server reads the stored initial prediction model, continuously performs iterative update to obtain the first prediction model, and stores the first prediction model. For a specific process, refer to the descriptions of obtaining the first prediction model in step 201 in the foregoing embodiment. Details are not described herein again.

(2) In subsequent update, the computing server reads the stored first prediction model, obtains the first antenna configuration parameter based on the first prediction model, performs simulation on the first antenna configuration parameter to obtain the score of the first antenna configuration parameter, and performs incremental update on the first prediction model based on the first antenna configuration parameter and the score of the first antenna configuration parameter, to obtain the second prediction model. For a specific process, refer to the descriptions of performing incremental update on the first prediction model to obtain the second prediction model in step 201 in the foregoing embodiment. Details are not described herein again.

There may be a plurality of implementations for obtaining the first antenna configuration parameter based on the first prediction model. In this embodiment of this application, two implementations are used as examples for description.

In a first implementation, an example in which the first prediction model in the foregoing embodiment is a probability prediction model is used for description.

For any group of antenna configuration parameters $x_k$, a predicted value $\mu(x_k)$ of a score of the antenna configuration parameter and a variance $\sigma(x_k)$ of the predicted value are calculated by inputting the antenna configuration parameter $x_k$ into the first prediction model:

$$\mathrm{k} = [\mathrm{k}(x_k, x_1), k(x_k, x_2) \dots, k(x_k, x_N)]$$

$$\mu(x_k) = \mathrm{k}K^{-1}F_N$$

$$\sigma^2(x_k) = k(x_k, x_k) - \mathrm{k}K^{-1}\mathrm{k}^{\mathrm{T}}$$

Based on the first prediction model, for each $x_k$, *where* $x_k \in X_{all}$ of all global antenna configuration parameters, a predicted value $\mu(x_k)$ of a score corresponding to each antenna configuration parameter and a variance $\sigma(x_k)$ of the predicted value may be calculated according to the foregoing formula. Alternatively, sampling calculation may be performed on only a part of antenna configuration parameters among all the global antenna configuration parameters. This is not specifically limited in this solution.

For each $x_k$ of all the global antenna configuration parameters, according to a cumulative probability density formula, a gain corresponding to the antenna configuration parameter may be calculated based on the predicted $\mu(x_k)$ and $\sigma(x_k)$:

$$EI(x_k) = \Phi\left(\frac{\mu(x_k) - f(x_*)}{\sigma(x_k)}\right) \cdot (\mu(x_k) - f(x_*))$$

$f(x^*)$ is the score corresponding to the target configuration parameter x* (namely, the third target configuration parameter) delivered to the live network in a previous round of parameter optimization solution. The gain $EI(x_k)$ may be understood as that a score $f(x_k)$ of the antenna configuration parameter $x_k$ is better than the score $f(x^*)$ of the antenna configuration parameter x* delivered to the live network.

A maximum antenna configuration parameter $x_{best}$ corresponding to EI, namely, the first antenna configuration parameter $x_{best}$, is determined based on $\underline{EI}(x_k)$ of each obtained antenna configuration parameter:

$$x_{best} = \underset{x_k \in X_{all}}{\mathrm{argmax}}\, EI(x_k)$$

A score $f(x_{bext})$ corresponding to $x_{best}$ is obtained by inputting $x_{best}$ to the simulation model.

Whether to stop the foregoing algorithm is determined by determining whether a total quantity of iterations N1 is reached or whether $x_{best}$ is obtained for N2 consecutive times. If the quantity of iterations N1 is reached, or $x_{best}$ is obtained for N2 consecutive times, the antenna configuration parameter $x_{best}$ and the score $f(x_{best})$ thereof are output. N1 may be, for example, 100, and N2 may be, for example, 10. This is not specifically limited in this solution.

In a second implementation, an example in which the first prediction model in the foregoing embodiment is a neural network prediction model is used for description.

For any group of antenna configuration parameters $x_k$, a predicted value $\mu(x_k)$ of a score of the antenna configuration parameter $x_k$ and a variance $\sigma(x_k)$ of the predicted value are calculated by inputting the antenna configuration parameter $x_k$ into the first prediction model:

$$\mu(x_k) = \mathrm{W}x_k + \mathrm{B}$$

$$\sigma^2(x_k) = \mathrm{G},$$

where G is a non-zero constant.

Based on the first prediction model, for each $x_k$, *where* $x_k \in X_{all}$ of all global antenna configuration parameters, a predicted value $\mu(x_k)$ of a score corresponding to each antenna configuration parameter and a variance $\sigma(x_k)$ of the predicted value may be calculated according to the foregoing formula. Alternatively, sampling calculation may be performed on only a part of antenna configuration parameters. This is not specifically limited in this solution.

For each $x_k$ of all the global antenna configuration parameters, according to a cumulative probability density formula, a gain corresponding to the antenna configuration parameter may be calculated based on the predicted $\mu(x_k)$ and $\sigma(x_k)$:

$$EI(x_k) = \Phi\left(\frac{\mu(x_k) - f(x_*)}{\sigma(x_k)}\right) \cdot (\mu(x_k) - f(x_*)),$$

where $f(x^*)$ is the score corresponding to the target configuration parameter $x_*$ (namely, the third target configuration parameter) delivered to the live network in a previous round of parameter optimization solution.

A maximum antenna configuration parameter $x_{best}$ corresponding to EI, namely, the first antenna configuration parameter $x_{best}$, is determined based on $EI(x_k)$ of each obtained antenna configuration parameter:

$$x_{best} = \underset{x_k \in X_{all}}{\mathrm{argmax}}\, EI(x_k)$$

A score $f(x_{best})$ corresponding to $x_{best}$ is obtained by inputting $x_{best}$ to the simulation model.

Whether to stop the foregoing algorithm is determined by determining whether a total quantity of iterations N1 is reached or whether $x_{best}$ is obtained for N2 consecutive times. If the quantity of iterations N1 is reached, or $x_{best}$ is obtained for N2 consecutive times, the antenna configuration parameter $x_{best}$ and the score $f(x_{best})$ thereof are output. N1 may be, for example, 100, and N2 may be, for example, 10. This is not specifically limited in this solution.

If the foregoing condition is not met, the first prediction model is updated based on $x_{best}$ and the score $f(x_{best})$ to obtain the second prediction model. For incremental update, refer to the descriptions of step 201 in the foregoing embodiment. Details are not described herein again.

406: If no further optimization is required, end optimization.

The foregoing uses only an example in which the target configuration parameter is delivered twice for description. Alternatively, the optimization may be performed for any other plurality of iterations. For example, after the first target configuration parameter is delivered in step 405, steps 403 to 406 may be repeatedly performed until the measurement data corresponding to the optimization region meets the preset requirement, and optimization is stopped.

In this embodiment of this application, incremental update is performed on a prediction model based on an antenna configuration parameter and a score of the first antenna configuration parameter, to obtain a new antenna configuration parameter based on an updated prediction model. According to the method, the prediction model is continuously updated incrementally, and the updated prediction model can be quickly converged to an antenna configuration parameter with a high score, so that efficiency of optimizing an antenna configuration parameter is improved, and delivery quality and delivery efficiency can be effectively improved.

In addition, in the antenna configuration parameter optimization method provided in this solution, when new measurement data is obtained, a simulation model does not need to be re-established based on the stored simulation model. This effectively improves overall optimization efficiency compared with the conventional technology.

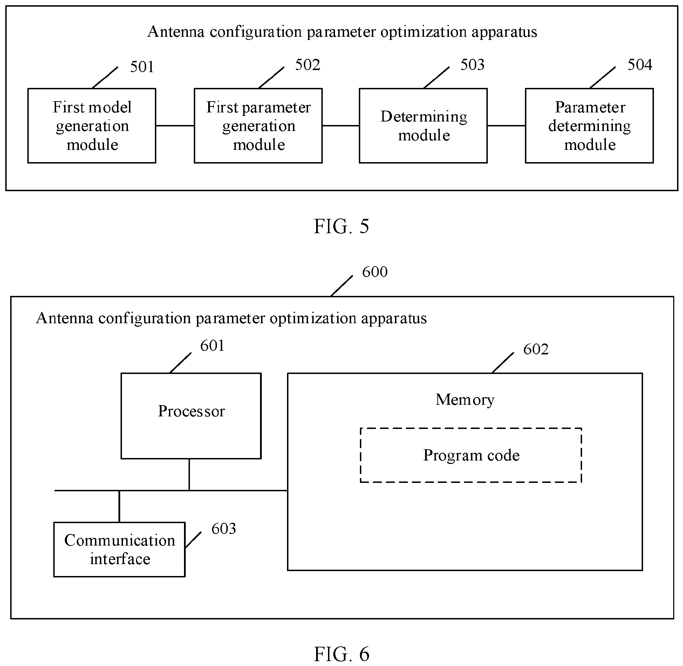

Refer to FIG. 5. An embodiment of this application provides an antenna configuration parameter optimization apparatus. The apparatus includes a first model generation module 501, a first parameter generation module 502, a determining module 503, and a parameter determining module 504. Details are as follows.

The first model generation module 501 is configured to perform incremental update on a first prediction model based on a first antenna configuration parameter corresponding to an optimization region and a score of the first antenna configuration parameter, to obtain a second prediction model.

The first parameter generation module 502 is configured to obtain a second antenna configuration parameter based on the second prediction model.

The determining module 503 is configured to determine whether to use the second antenna configuration parameter as a first target configuration parameter.

The parameter determining module 504 is configured to: if the second antenna configuration parameter is used as the first target configuration parameter, deliver the second antenna configuration parameter.

In this embodiment of this application, incremental update is performed on the first prediction model based on the first antenna configuration parameter and the score of the first antenna configuration parameter, to obtain a new antenna configuration parameter based on an updated prediction model. According to the method, the prediction model is updated, so that prediction accuracy of the prediction model can be improved, efficiency of optimizing an antenna configuration parameter can be improved, and delivery quality and delivery efficiency can be effectively improved.

The apparatus further includes: a second model generation module, configured to: if the second antenna configuration parameter is not the first target configuration parameter, obtain a third prediction model based on the second antenna configuration parameter, a score of the second antenna configuration parameter, and the second prediction model; and a second parameter generation module, configured to obtain a third antenna configuration parameter based on the third prediction model.

The score of the first antenna configuration parameter is obtained based on the first antenna configuration parameter and a first simulation model. The apparatus further includes a simulation model generation module, configured to: obtain measurement data and simulation data, where the measurement data is data obtained after a second target configuration parameter is delivered, and the simulation data is data obtained based on the second target configuration parameter and a second simulation model; and calibrate the second simulation model based on the measurement data and the simulation data, to obtain the first simulation model.

The apparatus further includes an obtaining module, configured to obtain the stored first prediction model.

The apparatus further includes a third model generation module, configured to obtain an initial prediction model based on a plurality of groups of historical antenna configuration parameters corresponding to the optimization region and a score of each group of historical antenna configuration parameters, to obtain the first prediction model based on the initial prediction model.

For a specific implementation of each module, refer to corresponding descriptions in the foregoing embodiments. Details are not described herein again.

This application further provides an antenna configuration parameter optimization apparatus. As shown in FIG. 6, the antenna configuration parameter optimization apparatus includes at least one processor 601, at least one memory 602, and at least one communication interface 603. The processor 601, the memory 602, and the communication interface 603 are connected and communicate with each other through a communication bus.

The processor 601 may be a general-purpose central processing unit (CPU), a microprocessor, an application-specific integrated circuit (application-specific integrated circuit, ASIC), or one or more integrated circuits for controlling program execution of the foregoing solutions.

The communication interface 603 is configured to communicate with another device or a communication network such as Ethernet, a radio access network (RAN), or a wireless local area network (Wireless Local Area Network, WLAN).

The memory 602 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (Electrically Erasable Programmable Read-Only Memory, EEPROM), a compact disc read-only memory (Compact Disc Read-Only Memory, CD-ROM) or other optic disk storage, optical disc storage (including a compact disc, a laser disc, an optical disc, a digital general-purpose optical disc, a Blu-ray optical disc, or the like), or magnetic disk storage media or other magnetic storage devices, or any other medium that can be accessed by a computer and that can be used to carry or store expected program code in an instruction form or in a data structure form, but this is not limited thereto. The memory may exist independently, and is connected to the processor through the bus. The memory may alternatively be integrated with the processor.

The memory 602 is configured to store application program code for executing the foregoing solutions, and the processor 601 controls the execution. The processor 601 is configured to execute the application program code stored in the memory 602.

The code stored in the memory 602 may be used to perform an antenna configuration parameter optimization method provided above.

An embodiment of this application further provides a chip system. The chip system is used in an electronic device. The chip system includes one or more interface circuits and one or more processors. The interface circuit and the processor are connected to each other through a line. The interface circuit is configured to receive a signal from a memory of the electronic device, and send the signal to the processor. The signal includes computer instructions stored in the memory. When the processor executes the computer instructions, the electronic device performs the methods.

An embodiment of this application further provides a computer-readable storage medium. The computer-readable storage medium stores instructions. When the instructions are run on a computer or a processor, the computer or the processor is enabled to perform one or more steps in any one of the foregoing methods.

An embodiment of this application further provides a computer program product including instructions. When the computer program product is run on a computer or a processor, the computer or the processor is enabled to perform one or more steps in any one of the foregoing methods.

All or some of the foregoing embodiments may be implemented by using software, hardware, firmware, or any combination thereof. When software is used to implement the foregoing embodiments, all or some of the foregoing embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted by using the computer-readable storage medium. The computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

In this application, "at least one" means one or more, and "a plurality of" means two or more. A term "and/or" describes an association relationship between associated objects and indicates that three relationships may exist. For example, A and/or B may indicate the following cases: Only A exists, both A and B exist, and only B exists, where A and B may be singular or plural.

A person of ordinary skill in the art may understand that all or some of the processes of the methods in embodiments may be implemented by a computer program instructing relevant hardware. The program may be stored in a computer-readable storage medium. When the program is executed, the processes of the methods in embodiments are performed. The foregoing storage medium includes any medium that can store program code, such as a ROM, a random access memory RAM, a magnetic disk, or an optical disc.

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

## Claims

1. An antenna configuration parameter optimization method, comprising:

   performing incremental update on a first prediction model based on a first antenna configuration parameter corresponding to an optimization region and a score of the first antenna configuration parameter, to obtain a second prediction model;
   obtaining a second antenna configuration parameter based on the second prediction model;
   determining whether to use the second antenna configuration parameter as a first target configuration parameter; and
   if the second antenna configuration parameter is used as the first target configuration parameter, delivering the second antenna configuration parameter.

2. The method according to claim 1, wherein the method further comprises:

   if the second antenna configuration parameter is not used as the first target configuration parameter, performing incremental update on the second prediction model based on the second antenna configuration parameter and a score of the second antenna configuration parameter, to obtain a third prediction model; and
   obtaining a third antenna configuration parameter based on the third prediction model.

3. The method according to claim 1 or 2, wherein the method further comprises:

   obtaining measurement data and simulation data, wherein the measurement data is data obtained after a second target configuration parameter is delivered, and the simulation data is data obtained based on the second target configuration parameter and a first simulation model;
   calibrating the first simulation model based on the measurement data and the simulation data, to obtain a second simulation model; and
   obtaining the score of the first antenna configuration parameter based on the first antenna configuration parameter and the second simulation model.

4. The method according to any one of claims 1 to 3, wherein the method further comprises:
   obtaining the stored first prediction model.

5. The method according to any one of claims 1 to 4, wherein the method further comprises:
   obtaining an initial prediction model based on a plurality of groups of historical antenna configuration parameters corresponding to the optimization region and a score of each group of historical antenna configuration parameters, to obtain the first prediction model based on the initial prediction model.

6. An antenna configuration parameter optimization apparatus, comprising:

   a first model generation module, configured to perform incremental update on a first prediction model based on a first antenna configuration parameter corresponding to an optimization region and a score of the first antenna configuration parameter, to obtain a second prediction model;
a first parameter generation module, configured to obtain a second antenna configuration parameter based on the second prediction model;
a determining module, configured to determine whether to use the second antenna configuration parameter as a first target configuration parameter; and
a parameter determining module, configured to: if the second antenna configuration parameter is used as the first target configuration parameter, deliver the second antenna configuration parameter.

7. The apparatus according to claim 6, wherein the apparatus further comprises:

a second model generation module, configured to: if the second antenna configuration parameter is not used as the first target configuration parameter, perform incremental update on the second prediction model based on the second antenna configuration parameter and a score of the second antenna configuration parameter, to obtain a third prediction model; and
a second parameter generation module, configured to obtain a third antenna configuration parameter based on the third prediction model.

8. The apparatus according to claim 6 or 7, wherein the apparatus further comprises a score determining module, configured to:
obtain measurement data and simulation data, wherein the measurement data is data obtained after a second target configuration parameter is delivered, and the simulation data is data obtained based on the second target configuration parameter and a first simulation model; calibrate the first simulation model based on the measurement data and the simulation data to obtain a second simulation model; and obtain the score of the first antenna configuration parameter based on the first antenna configuration parameter and the second simulation model.

9. The apparatus according to any one of claims 6 to 8, wherein the apparatus further comprises an obtaining module, configured to:
obtain the stored first prediction model.

10. The apparatus according to any one of claims 6 to 9, wherein the apparatus further comprises a third model generation module, configured to:
obtain an initial prediction model based on a plurality of groups of historical antenna configuration parameters corresponding to the optimization region and a score of each group of historical antenna configuration parameters, to obtain the first prediction model based on the initial prediction model.

11. An antenna configuration parameter optimization apparatus, comprising a processor and a memory, wherein the memory is configured to store program code, and the processor is configured to invoke the program code to perform the method according to any one of claims 1 to 5.

12. A computer-readable storage medium, wherein the computer-readable storage medium stores a computer program; and when the computer program is executed by a processor, the method according to any one of claims 1 to 5 is implemented.

13. A computer program product, wherein when the computer program product is run on a computer, the computer is enabled to perform the method according to any one of claims 1 to 5.

FIG. 1a

Input data → Simulation modeling → Poor-quality region identification → Parameter optimization → A parameter corresponding to an optimization solution

Information storage

Simulation model calibration

Incremental parameter optimization

New measurement data

FIG. 1b

EP 4 280 660 A1

Start

Is prediction model stored?

No

Yes

Read a plurality of groups of historical antenna configuration parameters and a score of each group of antenna configuration parameters that are stored

Read the stored prediction model

Generate a prediction model

Predict an optimal antenna configuration parameter and obtain a score of the antenna configuration parameter

Is an algorithm is converged or is a quantity of iterations reached?

No

Yes

Output the antenna configuration parameter and the score of the antenna configuration parameter, and store the prediction model

Perform incremental update on the prediction model based on the antenna configuration parameter and the score of the antenna configuration parameter

FIG. 1c

Perform incremental update on a first prediction model based on a first antenna configuration parameter corresponding to an optimization region and a score of the first antenna configuration parameter, to obtain a second prediction model ⟋ 201

Obtain a second antenna configuration parameter based on the second prediction model ⟋ 202

Determine whether to use the second antenna configuration parameter as a first target configuration parameter ⟋ 203

If the second antenna configuration parameter is used as the first target configuration parameter, deliver the second antenna configuration parameter ⟋ 204

FIG. 2

Obtain measurement data and simulation data, where the measurement data is data obtained after a second target configuration parameter is delivered, and the simulation data is data obtained based on the second target configuration parameter and a first simulation model ⟋ 3001

Calibrate the first simulation model based on the measurement data and the simulation data, to obtain a second simulation model ⟋ 3002

Obtain a score of a first antenna configuration parameter based on the first antenna configuration parameter and the second simulation model ⟋ 3003

FIG. 3

Obtain first measurement data corresponding to an optimization region — 401

Determine a third target configuration parameter based on the first measurement data, and deliver the third target configuration parameter — 402

Obtain second measurement data corresponding to the optimization region, where the second measurement data is data obtained after the third target configuration parameter is delivered — 403

Determine, based on the second measurement data, whether to continue optimization — 404

Yes

No

Obtain a first target configuration parameter based on a plurality of groups of historical configuration parameters and a score of each group of historical configuration parameters, and deliver the first target configuration parameter — 405

End optimization — 406

FIG. 4

Antenna configuration parameter optimization apparatus

501

First model
generation
module

502

First parameter
generation
module

503

Determining
module

504

Parameter
determining
module

FIG. 5

600

Antenna configuration parameter optimization apparatus

601

Processor

602

Memory

Program code

603

Communication
interface

FIG. 6

## INTERNATIONAL SEARCH REPORT

| International application No. |
|---|
| **PCT/CN2021/116534** |

**A. CLASSIFICATION OF SUBJECT MATTER**

H04W 24/04(2009.01)i;  G06F 30/27(2020.01)i

According to International Patent Classification (IPC) or to both national classification and IPC

**B. FIELDS SEARCHED**

Minimum documentation searched (classification system followed by classification symbols)

H04W; G06F

Documentation searched other than minimum documentation to the extent that such documents are included in the fields searched

Electronic data base consulted during the international search (name of data base and, where practicable, search terms used)

CNPAT, CNKI, EPODOC, WPI: 天线, 射频, RF, 配置, 参数, 优化, 评分, 指标, 标签, 模型, 更新, 增量, antenna, configuration, parameter, optimization, score, index, value, model, update

**C. DOCUMENTS CONSIDERED TO BE RELEVANT**

| Category* | Citation of document, with indication, where appropriate, of the relevant passages | Relevant to claim No. |
|---|---|---|
| X | CN 110572835 A (ZTE CORPORATION) 13 December 2019 (2019-12-13) description, paragraphs [0097]-[0182] and [0234]-[0236] | 1-13 |
| A | CN 111372265 A (CHINA TELECOM GLOBAL LIMITED) 03 July 2020 (2020-07-03) entire document | 1-13 |
| A | CN 106021813 A (CENTRAL SOUTH UNIVERSITY) 12 October 2016 (2016-10-12) entire document | 1-13 |
| A | US 2016165468 A1 (FUTUREWEI TECHNOLOGIES, INC.) 09 June 2016 (2016-06-09) entire document | 1-13 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **22 November 2021** | **01 December 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/116534**

| Patent document cited in search report | | | Publication date (day/month/year) | Patent family member(s) | | | Publication date (day/month/year) |
|---|---|---|---|---|---|---|---|
| CN | 110572835 | A | 13 December 2019 | WO | 2021043154 | A1 | 11 March 2021 |
| CN | 111372265 | A | 03 July 2020 | None | | | |
| CN | 106021813 | A | 12 October 2016 | None | | | |
| US | 2016165468 | A1 | 09 June 2016 | WO | 2016091171 | A1 | 16 June 2016 |
| | | | | CN | 107113634 | A | 29 August 2017 |
| | | | | EP | 3225045 | A1 | 04 October 2017 |
| | | | | WO | 2016095826 | A1 | 23 June 2016 |
| | | | | CN | 107113635 | A | 29 August 2017 |
| | | | | EP | 3225046 | A1 | 04 October 2017 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110068483